# EUROPÄISCHE PATENTANMELDUNG

(11) **EP 2 332 681 A2**
(43) Veröffentlichungstag der Anmeldung: **15.06.2011**
(21) Anmeldenummer: 11158329.0
(22) Anmeldetag: 12.02.2007
(51) Int. Cl.: B23C 5/20

(54) **Wendeschneidplatte für Fräswerkzeuge**

(30) Priorität: 07.03.2006 AT 3792006
(62) Teilanmeldung aus: 07701313.4
(71) Anmelder: BOEHLERIT GmbH & Co.KG., 8605 Kapfenberg (AT)
(72) Erfinder: Kirchberger, Peter, 3350, Haag (AT)
(74) Vertreter: Wirnsberger, Gernot

(57) **Zusammenfassung**

Die Erfindung bezieht sich auf eine Wendeschneidplatte (1) für ein Fräswerkzeug.

Weiters betrifft die Erfindung ein Fräswerkzeug, insbesondere zur Bearbeitung von Kurbel- oder Nockenwellen.

Um ein Fräswerkzeug, insbesondere zur Bearbeitung von Kurbel- und Nockenwellen zu schaffen, welches bei hoher Abspanleistung einen ruhigen Lauf mit verminderterer Antriebsleistungsaufnahme besitzt, ist erfindungsgemäß vorgesehen, dass die verwendete Wendeschneidplatte (1) zumindest einseitig eine zentrisch symmetrische Schneidkantenkontur (4, 4') aufweist, wobei in Draufsicht die Spanfläche (2, 2') eine konkave Keil- oder Muldenform mit einem Winkel α des Keil- oder Muldengrundes (21) zur Anlagefläche (3, 3') besitzt und an der Öffnungsseite des Winkels α die durch die Anlage- bzw. Seitenfläche (3, 3') und die Spanfläche (2, 2') gebildete Schneidkante (4, 4') gerundet ist.

## Beschreibung

Die Erfindung bezieht sich auf eine Wendeschneidplatte für ein Fräswerkzeug.

Genauer dargelegt, befasst sich die Erfindung mit einer Wendeschneidplatte für ein Fräswerkzeug zur Bearbeitung von Kurbel- oder Nockenwellen mit mindestens einer eine Bohrung aufweisenden Anlagefläche zur Festlegung an ein drehbares Werkzeugteil und mindestens einer mit den Seitenflächen Schneidkanten bildende Spanfläche.

Weiter betrifft die Erfindung ein Fräswerkzeug, insbesondere zur Bearbeitung von Kurbel-oder Nockenwellen.

Schneidplatten für Fräswerkzeuge, insbesondere zur Bearbeitung von Kurbelwellen, haben zumeist einen Keilwinkel, das ist der Winkel an der Schneide von der Freifläche zur Spanfläche des Schneideinsatzes, von 90°. Im Fräswerkzeug eingebaut bedeutet dies, dass der Spanwinkel der Schneidplatte negativ ist und einen Wert von ca. -8° bis -12° aufweist. Der Fachmann bezeichnet dies als "negative (Platten-)Geometrie".

Im praktischen Einsatz des Fräswerkzeuges bewirkt ein Keilwinkel von 90° eine hohe Schneidhaltigkeit der Schneidplatte, die negative Geometrie verursacht jedoch große Schnittkräfte bei der Abspanung.

Große Schnittkräfte am Fräswerkzeug belasten jedoch den Getriebeantrieb des Fräsers hoch, wobei dieser spielfrei sein muss und keinerlei Ratterschwingungen zulassen darf.

Eine Verringerung der Schnittkräfte an einer Schneidplatte und somit eine Herabsetzung der Belastung des Fräserantriebes können, wie dem Fachmann bekannt ist, durch eine sogenannte positive Schneidengeometrie erreicht werden. Bei einem Spanwinkel von unter 90° ist dafür ein Keilwinkel der Schneidplatte an der Schneide von 82° bis 70° vorzusehen.

Es wurde schon versucht, Wendeschneidplatten mit einer von der Schneide allseits eingesenkten Spanmulde einzusetzen und derart eine positive Schneidengeometrie des Fräswerkzeuges zu schaffen. Diese Schneidengeometrie der Schneidplatte kann zwar weitgehend die Erwartungen hinsichtlich einer Verringerung der Schneidkräfte erfüllen und somit eine Herabsetzung der Belastung des spielfrei arbeitenden Werkzeugantriebes bewirken, hat jedoch die Nachteile einer aufwendigen Fertigung, einer geringen Schneidkantenhaltbarkeit und einer mit hohen Maßtoleranzen und unebenen bzw. unbearbeiteten gesinterten Auflageflächen behafteten Plattengeometrie.

Die Erfindung setzt sich nun zum Ziel, eine Wendeschneidplatte für ein Fräswerkzeug der eingangs genannten Art zu schaffen, welche im Werkzeug, insbesondere bei einer Bearbeitung von Kurbelwellen, eine hohe Spanabnahme mit verringerten Schnittkräften bewirkt, eine weitgehend positive Schneidengeometrie aufweist, den Spandruck auf die Spanflächen im Bereich der Schneide vermindert, hohe Fertigungsgenauigkeit aufweist und herstellungstechnisch hohe Wirtschaftlichkeit und Plattengüte sicherstellt.

Weiter liegt der Erfindung die Aufgabe zugrunde, ein Fräswerkzeug anzugeben, welches bei hoher Abspanleistung einen ruhigen Lauf mit verminderter Antriebsleistungsaufnahme aufweist.

Das erstgenannte Ziel wird bei einer gattungsgemäßen Wendeschneidplatte dadurch erreicht, dass diese zumindest einseitig eine zentrisch symmetrische Schneidkantenkontur aufweist, wobei in Draufsicht die Spanfläche eine konkave Keil-oder Muldenform mit einem Winkel α des Keil- oder Muldengrundes zur Anlagefläche aufweist und an der Öffnungsseite des Winkels α die durch die Anlage- bzw. Seitenfläche und die Spanfläche gebildete Schneidkante gerundet ist.

Die mit der Erfindung erreichten Vorteile sind im Wesentlichen darin zu sehen, dass die Schneidkantenkontur auf die Kriterien einer hohen Spanabnahme beim Fräsen und für ein Wenden der Platte abgestimmt ist. Dabei ist die Spanfläche derart gestaltet, dass diese einerseits eine gewünschte Schneidengeometrie und Schneidkantenausbildung verwirklicht, andererseits eine sichere unverschiebbare Abstützung der Schneidplatte gewährleisten kann. Um einen für das Fräsen günstigen Schneidkonturverlauf zu schaffen, sind an zwei gegenüberliegenden Ecken Rundungen vorgesehen, wobei ein für eine positive Geometrie erforderlicher Keilwinkel in den Rundbereichen der Platte durch eine Winkelstellung des konkaven Spanflächengrundes zur Anlagefläche erzielt wird. Gemäß einer bevorzugten Ausführungsform einer Schneidplatte nach der Erfindung weist der Keilwinkel K (Kappa) der Schneidkante, gemessen senkrecht zum Keil- oder Muldengrund, einen Betrag von 50° bis 85° auf.

Ein derartiger Keilwinkel lässt eine vorteilhafte Positionierung der Schneidplatte im Fräser zu und erbringt eine hohe Schneidkantenhaltbarkeit bzw. eine geringe Gefahr von Schneidkantenausbrüchen in den hochbeanspruchten Zonen.

Wenn, wie mit Vorteil vorgesehen sein kann, die Schneidplatte beidseitig, bezogen auf die durchgehende Bohrung, gleich beabstandet gleich ausgeformte Spanflächen aufweist, ist ein Wenden mit einer Bereitstellung von insgesamt vier fertigungsneuen Schneidbereichen möglich.

Eine fertigungstechnisch günstige und insbesondere für eine Spanbildung vorzügliche Ausbildung einer Wendeschneidplatte nach der Erfindung kann dadurch erreicht werden, dass die Spanfläche normal auf den Keil- oder Muldengrund eine ebenflächige Keilform oder eine Muldenform mit einer geradlinigen Erzeugenden aufweist und durch spanende Bearbeitung, z.B. durch Schleifen, erstellt ist.

Ein von der Schneidkante an der Spanfläche ablaufender Span erfährt dabei nur einen durch eine Biegung verursachten geringen Druck gegen die Laufrichtung, sodass ein Verschleiß und die Wärmebelastung minimiert sind. Des Weiteren werden in günstiger Weise durch eine spanende Bearbeitung die Maßabweichungen der Schneidplatten gering gehalten und glatte Spanflächen für den Spanablauf geschaffen.

Die weitere Aufgabe der Erfindung wird bei einem Fräswerkzeug dadurch gelöst, dass zumindest an einer Seite eines im Wesentlichen scheibenförmigen Werkzeugkörpers Wendescheidplatten gemäß den vorgeordneten Beschreibungen derart angeordnet sind, dass deren Spanwinkel einen Wert null oder größer als null aufweist.

Die mit einem erfindungsgemäßen Fräswerkzeug erreichten Vorteile liegen im Wesentlichen darin, dass die Wendeschneidplatte auf einfache Weise derart eingebaut ist, dass in den Bereichen, wo die größte Spanabnahme erfolgt, eine positive Schneidengeometrie gegeben ist, die ihre Vorteile insbesondere in einer effizienten Abspanung mit geringem Spandruck und ratterfreiem Antrieb mit verminderter Leistung hat.

Mit Vorteil ist das Fräswerkzeug in einer Ausführungsform der Erfindung derart gestaltet, dass der Spanwinkel höchstens 20°, vorzugsweise höchstens 15°, beträgt.

Derart können Brüche der Schneide wirkungsvoll vermieden werden.

Im Folgenden wird die Erfindung anhand von lediglich einen Ausführungsweg darstellenden Zeichnungen näher erläutert. Es zeigen:
- Fig. 1: eine Schneidplatte;
- Fig. 2: eine Schneidplatte in Ansicht parallel zur Anlagefläche;
- Fig. 3: eine Schneidplatte in Ansicht parallel zur Bohrungsachse;
- Fig. 4: eine Schneidplatte in Draufsicht auf die Spanflächen;
- Fig. 5: eine Schneidplatte in Ansicht parallel zu den Spanflächen;
- Fig. 6: ein Fräswerkzeug im Ausschnitt mit separierter Schneidplatte.

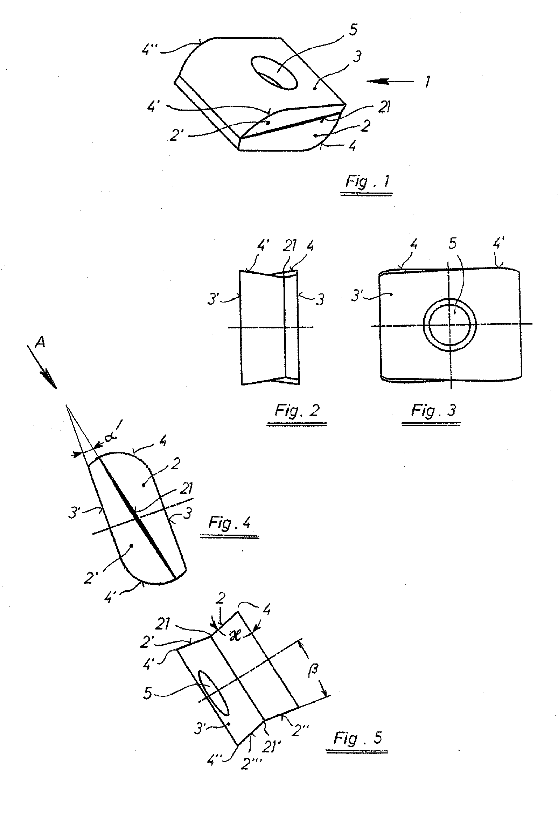

Fig. 1 zeigt eine Schneidplatte 1 mit einer Anlagefläche 3, 3' an ein Werkzeug und mit einer durchgehenden Bohrung 5 zur Befestigung derselben an diesem. Eine Tangential-Wendeschneidplatte 1 gemäß einer Ausführungsform der Erfindung weist stirnseitig eine ebene Spanfläche 2 und eine dergleichen Spanfläche 2' auf, die miteinander eine konkave Stirnflächen-Keilform mit einem Keilgrund 21 bilden. Die Spanflächen 2, 2' und die Anlageflächen 3, 3' der Platte bilden Schneidkanten 4, 4', 4", welche diagonal gegenüberliegend eine Rundung aufweisen, wobei der Keilgrund 21 entgegengesetzt diagonal verläuft und derart im Rundungsbereich vergrößerte Spanflächen 2, 2' gebildet sind.

In Fig. 2 ist in Ansicht eine Schneidplatte gemäß Fig. 1 parallel zu den Anlageflächen 3, 3' bzw. Seitenflächen gezeigt. Ein Keilgrund 21 verläuft schräg mit einem Winkel zu den Seitenflächen 3, 3', wobei mit den Spanflächen Schneidkanten 4, 4' gebildet werden.

Fig. 3 zeigt eine Schneidplatte 1 gemäß Fig. 2, jedoch in einer um 90° gedrehten Ansicht in Richtung der Bohrung 5.

In Fig. 4 ist eine erfindungsgemäße Schneidplatte 1 in einer anlageflächenparallelen Draufsicht auf die Spanflächen 2, 2', die einen Keilgrund 21 bilden, schematisch gezeigt.

Fig. 5 zeigt die Schneidplatte 1 in der Ansicht aus A in Richtung des Keilgrundes 21.

Der Keilgrund 21 verläuft mit einem Winkel α zur ebenen Anlagefläche 3' und spannt eine gegebenenfalls ebene Spanfläche 2' auf, welche zur Rundung der Seitenfläche hin vergrößert ist. Die Spanflächen 2, 2' und die Schneidkanten 4, 4' sind dabei zentrisch symmetrisch ausgebildet. In Draufsicht auf die Spanflächen 2, 2' kann bei einer Länge von ca. 16 mm und einer Breite von ca. 6,5 mm der Wendeschneidplatte der Winkel α beispielsweise ca. 12° betragen.

Aus Fig. 5 ist eine konkave Keilform der Spanflächen 2, 2' und gleich beabstandet zur Bohrung 5 jene der Spanflächen 2" und 2'" entnehmbar, welche jeweils einen Keilgrund 21 und 21' bilden. Senkrecht zu diesem Keilgrund 21, 21' spannen an den Schneiden 4, 4', 4", 4''' die Anlage- bzw. Seitenflächen 3,3' und die Spanflächen 2, 2', 2", 2''' einen Keilwinkel K (Kappa) auf.

Nach der Erfindung kann der Spanflächenbereich auch zylindrisch oder muldenförmig mit einer geradlinigen Erzeugenden ausgeführt sein, wobei sich im gerundeten Bereich der Schneidkanten 4, 4', 4", 4'" gegebenenfalls ein unterschiedlicher Keilwinkel ergibt.

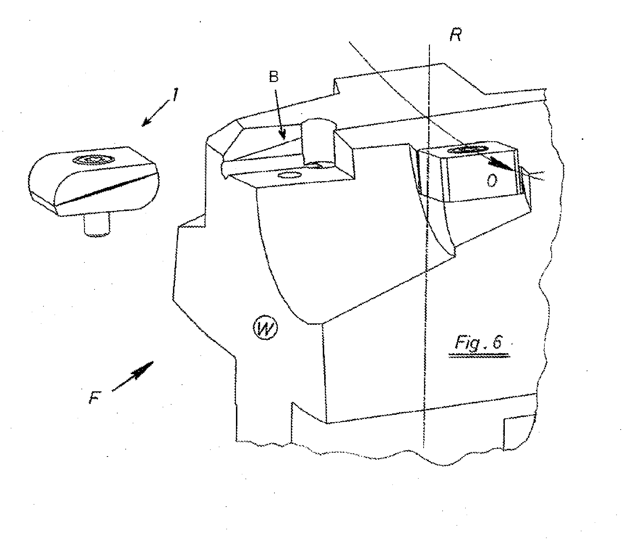

Fig. 6 zeigt einen Ausschnitt aus einem Fräswerkzeug F, welches senkrecht zum Radius R an einer Werkzeugaußenseite W eine Ausnehmung B für eine separat dargestellte erfindungsgemäße Wendeschneidplatte 1 aufweist. Durch 0 ist die Werkzeugbewegung gekennzeichnet.

## Patentansprüche

1. Wendeschneidplatte (1) für ein Fräswerkzeug, insbesondere zur Bearbeitung von Kurbel- oder Nockenwellen, mit mindestens einer eine durchgehende Bohrung (5) aufweisenden Anlagefläche (3) zur Festlegung an ein drehbares Werkzeug und mindestens einer mit den Seitenflächen Schneidkanten (4) bildenden Spanfläche (2, 2'), **dadurch gekennzeichnet, dass** die Wendeschneidplatte (1) zumindest einseitig eine zentrisch symmetrische Schneidkantenkontur (4, 4') aufweist, wobei in Draufsicht die Spanfläche (2, 2') eine konkave Keil- oder Muldenform mit einem Winkel α des Keil- oder Muldengrundes (21) zur Anlagefläche (3, 3') aufweist und an der Öffnungsseite des Winkels α die durch die Anlage- bzw. Seitenfläche (3, 3') und die Spanfläche (2, 2') gebildete Schneidkante (4, 4') gerundet ist.

2. Wendeschneidplatte (1) nach Anspruch 1, **dadurch gekennzeichnet, dass** der Keilwinkel K (Kappa) der Schneidkante (4, 4') gemessen senkrecht zum Keil- oder Muldengrund (21, 21') einen Betrag von 50° bis 85° aufweist.

3. Wendeschneidplatte (1) nach Anspruch1 oder 2, **dadurch gekennzeichnet, dass** die Wendeschneidplatte (1) beidseitig bezogen auf die durchgehende Bohrung (5) gleich beabstandet gleich ausgeformte Spanflächen (2, 2', 2", 2"') aufweist.

4. Wendeschneidplatte (1) nach einem der Ansprüche 1 bis 3, **dadurch gekennzeichnet, dass** die Spanfläche (2, 2') normal auf den Keil- oder Muldengrund (21) eine ebenflächige Keilform oder eine Muldenform mit einer geradlinigen Erzeugenden aufweist und durch spanende Bearbeitung, z. B. durch Schleifen, erstellt ist.

5. Fräswerkzeug (F), insbesondere zur Bearbeitung von Kurbel- oder Nockenwellen, **dadurch gekennzeichnet, dass** zumindest an einer Seite eines im Wesentlichen scheibenförmigen Werkzeugkörpers Wendeschneidplatten gemäß der vorgeordneten Ansprüche derart angeordnet sind, dass deren Spanwinkel einen Wert null oder größer als null aufweist.

6. Fräswerkzeug (F) nach Anspruch 5, **dadurch gekennzeichnet, dass** der Spanwinkel höchstens 20°, vorzugsweise höchstens 15°, beträgt.
